# FASCICULE DE BREVET EUROPEEN

(11) **EP 1 427 622 B1**
(45) Date de publication et mention de la délivrance du brevet: **31.08.2005**
(21) Numéro de dépôt: 02774910.0
(22) Date de dépôt: 06.09.2002
(51) Int. Cl.: B60T 13/56

(54) **PROCEDE DE CALIBRAGE D'UN SERVOMOTEUR D'ASSISTANCE AU FREINAGE**
KALIBRIERMETHODE EINES BREMSSERVOS
METHOD OF CALIBRATING A BRAKE BOOSTER

(30) Priorité: 11.09.2001 FR 0111761
(43) Date de publication de la demande: 16.06.2004
(73) Titulaire: ROBERT BOSCH GMBH, 70442 Stuttgart (DE)
(72) Inventeur: QUIRANT, Werner, 71717 Bleistein (DE); PIEL, Jean-Marc, F-93700 Drancy (FR)
(74) Mandataire: Hurwic, Aleksander Wiktor
(86) Numéro de dépôt international: PCT/FR2002/003046
(87) Numéro de publication internationale: WO 2003/022653

(56) Documents cités:
- EP-A- 0 487 938
- EP-A- 0 982 211
- US-A- 4 934 249

## Description

L'invention concerne un procédé de calibrage d'un servomoteur d'assistance pneumatique pour un circuit de freinage de véhicule automobile.

Le servomoteur d'assistance pneumatique d'un circuit de freinage pour véhicule automobile est associé à un maître-cylindre hydraulique pour amplifier l'effort exercé sur une pédale de frein par le conducteur du véhicule et transmettre cet effort amplifié au piston du maître-cylindre pour générer une pression hydraulique de serrage des freins du véhicule.

Le servomoteur comprend deux chambres qui sont séparées de façon étanche par une cloison mobile portant un piston axial agissant sur le piston du maître-cylindre, l'une de ces chambres étant une chambre de dépression reliée à une source de dépression telle que le collecteur d'admission du moteur du véhicule, et l'autre chambre étant une chambre de travail qui est reliée au repos à la chambre de dépression et qui, au freinage, est isolée de cette chambre de dépression et reliée à l'atmosphère environnante sous commande de la pédale de frein actionnée par le conducteur.

En fonctionnement, le servomoteur amplifie l'effort appliqué à la pédale de façon proportionnelle à la différence de pression entre les deux chambres, l'amplification étant maximale quand la pression dans la chambre de travail devient égale à la pression atmosphérique, le servomoteur étant alors à un point de saturation. Au-delà de ce point, l'effort appliqué à la pédale n'est plus amplifié par le servomoteur.

On a déjà proposé de fournir, au-delà de ce point, un complément d'assistance au freinage que l'on obtient par d'autres moyens, tels par exemple qu'une pompe hydraulique, dont le fonctionnement se traduit par une augmentation de la pression hydraulique de serrage des freins. Pour que ce changement d'assistance ne soit pas perceptible par le conducteur, il faut que l'assistance fournie par les moyens de complément d'assistance au début de leur fonctionnement soit sensiblement la même que celle fournie par le servomoteur au point de saturation, ce qui oblige à déterminer le point de saturation du servomoteur avec une précision suffisante. Le document EP 0 487 938 A divulge le préambule de la revendication 1.

Dans la technique connue, on détermine une courbe caractéristique de saturation d'un servomoteur d'assistance pneumatique à partir du dimensionnement de ce servomoteur. Toutefois, en raison de la nature même des servomoteurs et de leur fabrication, on constate une dispersion relativement importante des courbes réelles de saturation des servomoteurs par rapport à la courbe théorique, cette différence pouvant atteindre 4 bars en ce qui concerne la pression de sortie du maître-cylindre, ce qui est loin d'être négligeable et est tout-à-fait perceptible par le conducteur du véhicule qui applique un effort à la pédale de frein.

La présente invention a notamment pour but d'éviter cet inconvénient.

Elle propose à cet effet un procédé permettant de déterminer avec précision la courbe de saturation d'un servomoteur d'assistance pneumatique d'un circuit de freinage de façon à ce que, notamment, un complément d'assistance au freinage puisse être apporté sans que cet apport soit perceptible par le conducteur du véhicule.

Elle propose à cet effet un procédé de calibrage d'un servomoteur d'assistance pneumatique, ce servomoteur comprenant une chambre de dépression destinée à être reliée à une source de dépression et une chambre de travail destinée à être reliée sélectivement à la chambre de dépression ou à l'atmosphère environnante, ces deux chambres étant séparées l'une de l'autre par une cloison mobile portant un piston axial d'actionnement d'un maître-cylindre hydraulique, caractérisé en ce qu'il consiste à mesurer et à enregistrer, pour une dépression prédéterminée dans la chambre de dépression, les coordonnées de plusieurs points d'une courbe caractéristique de fonctionnement du servomoteur dans un repère orthonormé d'axes représentant un paramètre d'entrée du servomoteur et un paramètre de sortie du servomoteur ou du maître-cylindre associé au servomoteur, ces points de fonctionnement étant situés au-delà d'une phase de saut et de part et d'autre d'un point de saturation sur ladite courbe de fonctionnement.

Cette mesure et cet enregistrement peuvent être réalisés sur un banc de mesure relativement simple, installé par exemple en sortie d'une chaîne de fabrication de servomoteurs ou dans une chaîne de montage des servomoteurs dans des véhicules automobiles. Les points de fonctionnement dont les coordonnées sont mesurées et enregistrées permettent de déterminer de façon automatisée, en utilisant des moyens de traitement de l'information, toute la courbe caractéristique de fonctionnement du servomoteur pour une valeur prédéterminée de la dépression dans la chambre de dépression du servomoteur.

Avantageusement, les paramètres mesurés et enregistrés sont des grandeurs physiques qui sont disponibles et mesurables sur un véhicule automobile équipé dudit servomoteur et dudit maître-cylindre.

De préférence, le paramètre d'entrée précité est la dépression dans la chambre de travail du servomoteur et le paramètre de sortie est la force de sortie du servomoteur ou la pression hydraulique de sortie du maître-cylindre associé au servomoteur.

Avantageusement, on peut utiliser, pour mesurer et enregistrer les valeurs de ces paramètres, des capteurs dont sont normalement équipés le servomoteur et le maître-cylindre.

On peut ainsi notamment mesurer et enregistrer les valeurs des paramètres d'entrée et de sortie pour deux points de la courbe caractéristique qui sont situés entre la phase de saut et le point de saturation et pour deux autres points qui sont situés au-delà du point de saturation.

Cela permet de calculer avec précision la position du point de saturation sur cette courbe caractéristique de fonctionnement.

On peut ensuite, à partir de là, déterminer de façon précise la courbe caractéristique de saturation du servomoteur et utiliser cette courbe pour commander avec précision des fonctions évoluées, notamment d'assistance au freinage, de complément d'assistance au freinage, de surveillance du fonctionnement ou du vieillissement du servomoteur, etc.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique partielle d'un circuit de freinage pour véhicule automobile auquel l'invention est applicable ;
- la figure 2 est un graphe représentant un réseau de courbes de variation de la pression hydraulique en sortie du maître-cylindre en fonction de l'effort à la pédale ;
- la figure 3 est un graphe représentant la courbe caractéristique de saturation du servomoteur d'assistance pneumatique et une courbe de freinage.

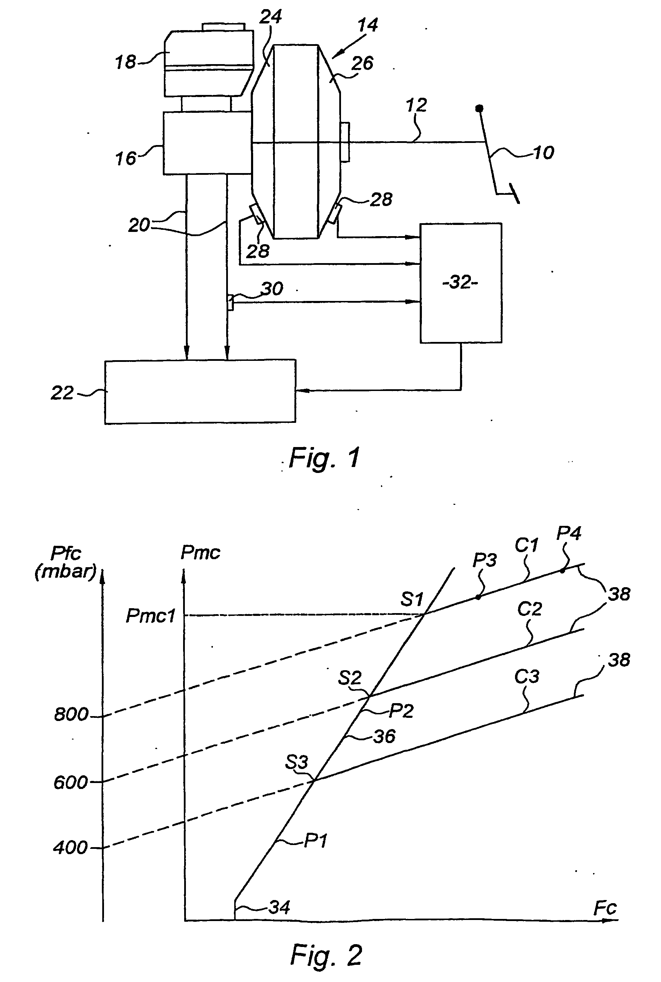

Le circuit de freinage pour véhicule automobile représenté schématiquement en figure 1 comprend une pédale de frein 10 reliée par une tige de commande 12 à un piston axial d'un servomoteur 14 d'assistance pneumatique associé à un maître-cylindre hydraulique 16 qui est alimenté en liquide de frein par un réservoir 18 et dont les sorties 20 sont reliées à des moyens 22 de freinage des roues du véhicule.

Le servomoteur 14 comprend une chambre avant ou chambre de dépression 24 qui est reliée à une source de dépression, telle par exemple que le collecteur d'admission du moteur à combustion interne du véhicule, et une chambre arrière 26 ou chambre de travail qui est sélectivement reliée à la chambre de dépression 24 ou qui est mise en communication avec l'atmosphère environnante, ces deux chambres étant séparées l'une de l'autre à étanchéité par une cloison mobile dont la partie centrale porte le piston axial du servomoteur 14. La tige de commande 12 reliée à la pédale de frein 10 agit sur le piston axial du servomoteur qui agit lui-même sur le piston primaire du maître-cylindre 16.

Des capteurs de pression 28 sont montés dans les chambres 24 et 26 du servomoteur 14 et un capteur de pression hydraulique 30 est monté sur une sortie 20 du maître-cylindre 16, les capteurs 28 et 30 produisant des signaux de sortie, respectivement Pfc représentant la pression dans la chambre avant. 24 du maître-cylindre 14, Prc représentant la pression dans la chambre de travail 26 et Pmc représentant la pression hydraulique en sortie du maître-cylindre, ces signaux étant appliqués à des entrées de moyens 32 de traitement de l'information qui sont programmés pour commander si nécessaire des moyens d'augmentation de la pression hydraulique dans les moyens de freinage 22, ces moyens étants tels qu'une pompe hydraulique faisant par exemple partie d'un circuit du type ABS ou ESP.

Lorsque le conducteur appuie sur la pédale de frein 10, la chambre de travail 26 qui était jusque là reliée à la chambre de dépression 24, est isolée de celle-ci puis mise en communication avec l'atmosphère ambiante de sorte que la pression augmente progressivement dans la chambre de travail 26, la pression dans la chambre 24 étant à une valeur inférieure à la pression atmosphérique et par exemple égale à la dépression dans le collecteur d'admission du moteur à combustion interne du véhicule.

La différence de pression entre les chambres 24 et 26 du servomoteur 14 amplifie l'effort qui est transmis par la tige de commande 12 au piston du servomoteur de sorte que l'effort appliqué au piston primaire du maître-cylindre 16 est égal à l'effort appliqué à la tige de commande 12 multiplié par un coefficient d'amplification proportionnel à la différence de pression entre les deux chambres du servomoteur. Lorsque la pression dans la chambre de travail 26 devient égale à la pression atmosphérique, l'amplification par le servomoteur est maximale et on dit alors que ce servomoteur est saturé.

S'il faut ensuite fournir encore une assistance au freinage, cette assistance complémentaire est générée par une augmentation de la pression hydraulique dans les moyens de freinage 22, résultant du fonctionnement de la pompe précitée commandée par les moyens 32.

Il est important que le passage de l'assistance fournie par le servomoteur 14 à l'assistance fournie par des moyens complémentaires ne soit pas perceptible par le conducteur du véhicule qui exerce un effort de freinage sur la pédale 10. Cette perception pourrait en effet être interprétée par le conducteur comme un défaut du système de freinage et pourrait l'amener à relâcher l'effort qu'il applique à la pédale 10, avec les conséquences que l'on peut imaginer.

Pour éviter cela, il faut que l'assistance fournie par les moyens complémentaires au début de leur fonctionnement corresponde à l'assistance fournie par le servomoteur 14 au point de saturation, ce qui implique de connaître ce point de saturation avec une certaine précision.

A cette fin, l'invention prévoit de mesurer et d'enregistrer quelques points d'une courbe de fonctionnement du servomoteur 14, cette mesure et cet enregistrement étant avantageusement réalisés en usine, à la fin de la fabrication du servomoteur ou lors de son montage sur un véhicule automobile.

Un réseau de courbes de fonctionnement d'un servomoteur 14 est représenté schématiquement en figure 2, ces courbes de fonctionnement illustrant la variation de la pression hydraulique Pmc en sortie du maître-cylindre 16 associé au servomoteur 14, en fonction de l'effort d'entrée Fe qui est appliqué par la tige de commande 12 au piston axial du servomoteur 14, et en fonction également de la dépression régnant dans la chambre 24 du servomoteur.

Le réseau de courbes C1, C2 et C3 de la figure 2 a été tracé pour des dépressions dans la chambre 24 égales respectivement à 800, 600 et 400 mbars, chaque courbe comprenant une première partie 34 appelée phase de saut, une deuxième partie 36 d'amplification de l'effort d'entrée Fe par le servomoteur 14 en fonction de la dépression dans la chambre avant 24, et une troisième partie 38 correspondant au fonctionnement lorsque le servomoteur 14 est saturé. Dans cette troisième partie 38, l'amplification de l'effort d'entrée Fe est due au dimensionnement du maître-cylindre 16 et correspond à un rapport de sections différent de 1.

Sur chaque courbe, le point de saturation S1, S2, S3 respectivement est déterminé par l'intersection des deuxième et troisième parties 36, 38 de la courbe.

A la saturation, la pression dans la chambre de travail 26 est égale à la pression atmosphérique et la différence de pression entre les deux chambres 24 et 26 est égale à la dépression dans la chambre de dépression 26. On peut donc visualiser en figure 2 les valeurs de cette dépression sur un axe Pfc parallèle à l'axe des ordonnées Pmc, en prolongeant les troisièmes parties 38 des courbes C1, C2 et C3 comme représenté en pointillés.

L'invention propose de déterminer et d'enregistrer pour chaque servomoteur 14 une courbe de fonctionnement pour une valeur déterminée de la dépression dans la chambre 25, par exemple de 800 mbars, ce qui correspond à la courbe C1 de la figure 2. Pour cela, on mesure et on enregistre les coordonnées de deux points P1 et P2 sur la deuxième partie 36 de la courbe C1 et de deux points P3 et P4 sur la troisième partie 38 de la courbe C1.

De préférence, ces coordonnées sont des valeurs de grandeurs physiques qui sont disponibles et mesurables sur le véhicule automobile équipé du système de freinage de la figure 1.

Il est également avantageux de mesurer les valeurs de ces grandeurs physiques en utilisant des moyens déjà présents dans le système de freinage, tels par exemple que les capteurs de pression 28 et 30.

Ainsi, on mesurera et on enregistrera en entrée, non pas l'effort Fe, mais la pression Prc dans la chambre de travail 26 du servomoteur et en sortie, on enregistrera et on mesurera la pression hydraulique Pmc de sortie du maître-cylindre 16.

Ces couples de valeurs obtenus pour les points P1, P2, P3 et P4 permettent de tracer les parties 36 et 38 de la courbe C1 et donc de déterminer la position du point S1 de saturation qui est à l'intersection des parties 36 et 38.

Comme on le voit bien sur le réseau de courbes de la figure 2, les troisièmes parties des courbes C1, C2, C3 sont parallèles entre elles et rattachées à la même deuxième partie 36. Ainsi, à partir de la courbe C1 dans le repère Fe (ou Prc), Pmc et de l'axe Pfc, on peut déterminer toutes les courbes C2, C3, ... pour des valeurs de Pfc égales à 600, 400, ... mbars, et donc tous les points de saturation S2, S3, ... du servomoteur 14 pour toutes les valeurs de Pfc.

La connaissance, par calcul, des valeurs Pmc correspondant à ces points de saturation permet de commander avec précision un complément d'assistance au-delà de la saturation, sans discontinuité dans l'assistance au passage par le point de saturation.

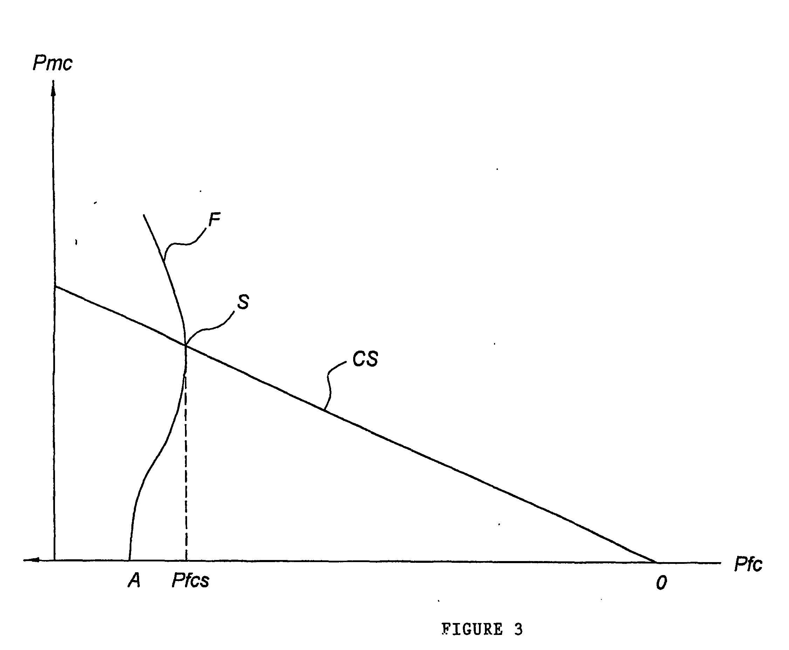

On peut aussi, comme représenté en figure 3, tracer une courbe de saturation CS du servomoteur 14 qui donne les valeurs de la pression Pmc en sortie du maître-cylindre 16 en fonction de la dépression Pfc dans la chambre 24 du servomoteur 14.

La connaissance précise de cette courbe de saturation CS permet de déterminer avec précision la commande qu'il faut appliquer à des moyens fournissant un complément d'assistance au-delà de la saturation du servomoteur 14, pour qu'il n'y ait pas de discontinuité dans cette assistance.

Sur la figure 3, on a également représenté une courbe de freinage F représentant la variation de la pression Pmc en sortie du maître-cylindre 16 en fonction de la valeur de la dépression Pfc dans la chambre 24 du servomoteur pendant un freinage du véhicule. La courbe F qui commence en A coupe la courbe de saturation CS en un point S qui est le point de saturation du servomoteur 14 correspondant à la valeur de la dépression Pfcs dans la chambre 24 du servomoteur. L'effort de freinage appliqué par le conducteur du véhicule sur la pédale 10 est amplifié par le servomoteur 14 entre les points A et S puis peut être encore amplifié par d'autres moyens, tels qu'une pompe hydraulique, au-delà du point S si nécessaire.

La détermination précise de la position du point de saturation S permet également de surveiller le fonctionnement du servomoteur 14 et son vieillissement au cours du temps, et donc de signaler en temps utile une détérioration ou un défaut de ce servomoteur.

## Revendications

1. Procédé de calibrage d'un servomoteur d'assistance pneumatique pour un circuit de freinage de véhicule automobile, ce servomoteur (14) comprenant une chambre de dépression (24) destinée à être reliée à une source de dépression et une chambre de travail (26) destinée à être reliée sélectivement à la chambre de dépression ou à l'atmosphère environnante, ces deux chambres étant séparées l'une de l'autre par une cloison mobile portant un piston axial d'actionnement d'un maître-cylindre hydraulique (16), **caractérisé en ce qu'**il consiste à mesurer et à enregistrer, pour une dépression déterminée dans la chambre de dépression (24), les coordonnées de plusieurs points d'une courbe de fonctionnement du servomoteur dans un repère orthonormé d'axes représentant un paramètre d'entrée du servomoteur et un paramètre de sortie du servomoteur ou du maître-cylindre associé au servomoteur, ces points de fonctionnement étant situés au-delà d'une phase de saut et de part et d'autre d'un point de saturation sur ladite courbe de fonctionnement.

2. Procédé selon la revendication 1, **caractérisé en ce que** les paramètres précités sont des grandeurs physiques disponibles et mesurables sur un véhicule automobile équipé dudit servomoteur et dudit maître-cylindre.

3. Procédé selon la revendication 1 ou 2, **caractérisé en ce que** le paramètre d'entrée est la dépression dans la chambre de travail (26) du servomoteur (14).

4. Procédé selon l'une quelconque des revendications précédentes, **caractérisé en ce que** le paramètre de sortie est la force de sortie du servomoteur (14) ou la pression hydraulique de sortie du maître-cylindre (16).

5. Procédé selon l'une quelconque des revendications précédentes, **caractérisé en ce qu'**on mesure et on enregistre les valeurs desdits paramètres d'entrée et de sortie pour deux points (P1, P2) de la courbe située entre la phase de saut et le point de saturation, et pour deux points (P3, P4) situés au-delà du point de saturation.

6. Procédé selon l'une quelconque des revendications précédentes, **caractérisé en ce qu'**on calcule ensuite avec précision les coordonnées du point de saturation sur ladite courbe de fonctionnement.

7. Procédé selon l'une quelconque des revendications précédentes, **caractérisé en ce qu'**on détermine ensuite une courbe caractéristique de saturation du servomoteur (14).

8. Procédé selon l'une quelconque des revendications précédentes, **caractérisé en ce qu'**il consiste ensuite à utiliser les coordonnées du point du saturation du servomoteur pour commander de façon précise des fonctions évoluées de freinage, de complément d'assistance de freinage et/ou de surveillance du fonctionnement ou du vieillissement du servomoteur.

## Patentansprüche

1. Verfahren zur Kalibrierung eines pneumatischen Unterstützungsservomotors für einen Kraftfahrzeugbremskreis, wobei dieser Servomotor (14) eine Unterdruckkammer (24) aufweist, die dazu bestimmt ist, mit einer Unterdruckquelle verbunden zu sein, und eine Arbeitskammer (26), die dazu bestimmt ist, selektiv mit der Unterdruckkammer oder mit der Umgebungsatmosphäre verbunden zu sein, wobei diese beiden Kammern durch eine bewegliche Wand voneinander getrennt sind, welche einen axialen Kolben zur Betätigung eines hydraulischen Hauptzylinders (16) trägt, **dadurch gekennzeichnet, dass** es darin besteht, für einen bestimmten Unterdruck in der Unterdruckkammer (24) die Koordinaten mehrerer Punkte einer Betriebskurve des Servomotors in einem Koordinatensystem zu messen und zu speichern, dessen Achsen einen Eingangsparameter des Servomotors und einen Ausgangsparameter des Servomotors oder des dem Servomotor zugeordneten Hauptzylinders darstellen, wobei diese Betriebspunkte sich jenseits einer Sprungphase und auf der einen und der anderen Seite eines Sättigungspunktes auf der Betriebskurve befinden.

2. Verfahren nach Anspruch 1, **dadurch gekennzeichnet, dass** die vorgenannten Parameter physikalische Größen sind, die an dem mit dem Servomotor und dem Hauptzylinder ausgestatteten Kraftfahrzeug verfügbar und messbar sind.

3. Verfahren nach Anspruch 1 oder 2, **dadurch gekennzeichnet, dass** der Eingangsparameter der Unterdruck in der Arbeitskammer (26) des Servomotors (14) ist.

4. Verfahren nach einem der vorhergehenden Ansprüche, **dadurch gekennzeichnet, dass** der Ausgangsparameter die Ausgangskraft des Servomotors (14) oder der hydraulische Ausgangsdruck des Hauptzylinders (16) ist.

5. Verfahren nach einem der vorhergehenden Ansprüche, **dadurch gekennzeichnet, dass** die Werte des Eingangs- und Ausgangsparameters für zwei Punkte (P1, P2) der Kurve gemessen und gespeichert werden, welche sich zwischen der Sprungphase und dem Sättigungspunkt befindet, und für zwei Punkte (P3, P4), die sich jenseits des Sättigungspunktes befinden.

6. Verfahren nach einem der vorhergehenden Ansprüche, **dadurch gekennzeichnet, dass** anschließend die Koordinaten des Sättigungspunktes auf der Betriebskurve genau berechnet werden.

7. Verfahren nach einem der vorhergehenden Ansprüche, **dadurch gekennzeichnet, dass** anschließend eine Sättigungskennlinie des Servomotors (14) bestimmt wird.

8. Verfahren nach einem der vorhergehenden Ansprüche, **dadurch gekennzeichnet, dass** es anschließend darin besteht, die Koordinaten des Sättigungspunktes des Servomotors zu verwenden, um verbesserte Funktionen des Bremsens, der zusätzlichen Bremsunterstützung und/oder der Überwachung des Betriebs oder der Alterung des Servomotors genau zu steuern.

## Claims

1. Calibration process for a pneumatic-assistance servomotor for a braking circuit of a motor vehicle, said servomotor (14) comprising a negative-pressure chamber (24), intended to be connected to a negative-pressure source, and a working chamber (26) to be selectively connected with the negative-pressure chamber or to the atmospheric-pressure ambient air, wherein said chambers are separated by a moving partition wall bearing an axial piston for the actuation of a hydraulic master cylinder (16), **characterised in that** said process consists in measuring and recording, for a determined negative pressure inside the negative-pressure chamber (24), the coordinates of several points of an operating curve of the servomotor, using an orthonormal plot of axes, representing an input parameter of the servomotor and an output parameter of the servomotor or of the master cylinder associated with said servomotor, said operating points being located beyond a jump phase and on either side of a saturation point on said operating curve.

2. Process according to claim 1, **characterised in that** said parameters are physical quantities, which are available and measurable in a motor vehicle equipped with said servomotor and with said master cylinder.

3. Process according to claim 1 or claim 2, **characterised in that** the input parameter is the negative pressure inside the working chamber (26) of the servomotor (14).

4. Process according to any one of the preceding claims, **characterised in that** the output parameter is the output force of the servomotor (14) or the output hydraulic pressure of the master cylinder (16).

5. Process according to any one of the preceding claims, **characterised in that** the values of said input and output parameters are measured and recorded as regards two points (P1, P2) of the curve, situated between the jump phase and the saturation point and, besides, as concerns two other points (P3, P4), located beyond the saturation point.

6. Process according to any one of the preceding claims, **characterised in that** next the coordinates of the saturation point on said operating curve are calculated precisely.

7. Process according to any one of the preceding claims, **characterised in that** next a characteristic saturation curve of the servomotor (14) is determined.

8. Process according to any one of the preceding claims, **characterised in that** next the coordinates of the saturation point of the servomotor are turned to account for an accurate control of the advanced functions, as concerns the braking operation, the complemental braking assistance and/or the monitoring of the performance or of the ageing of the servomotor.
